Europäisches Patentamt

European Patent Office

Office européen des brevets

(19)

(11) Numéro de publication : **0 039 109
B1**

(12) **FASCICULE DE BREVET EUROPÉEN**

(45) Date de publication du fascicule du brevet :
05.09.84

(51) Int. Cl.³ : **H 04 M   9/08**

(21) Numéro de dépôt : **81200417.4**

(22) Date de dépôt : **13.04.81**

(54) **Dispositif de protection contre l'effet Larsen dans un poste téléphonique à haut-parleur.**

(30) Priorité : **25.04.80 FR 8009411**

(43) Date de publication de la demande :
**04.11.81 Bulletin 81/44**

(45) Mention de la délivrance du brevet :
**05.09.84 Bulletin 84/36**

(84) Etats contractants désignés :
**CH DE FR GB LI SE**

(56) Documents cités :
**FR-A- 1 493 794
REVIEW OF THE ELECTRICAL COMMUNICATION
LABORATORIES, vol. 27, no. 5,6, mai-juin 1979,
TOKYO (JP) K. KATO et al.: "Model S-1P loudspeaker
telephone circuit design", pages 342-367**

(73) Titulaire : **TELECOMMUNICATIONS RADIOELECTRI-
QUES ET TELEPHONIQUES T.R.T.
88, rue Brillat Savarin
F-75013 Paris (FR)**

(72) Inventeur : **Ferrieu, Gilbert Marie Marcel
SOCIETE CIVILE S.P.I.D. 209, rue de l'Université
F-75007 Paris (FR)**
Inventeur : **Lefort, Emmanuel
SOCIETE CIVILE S.P.I.D. 209, rue de l'Université
F-75007 Paris (FR)**
Inventeur : **Moliere, Françoise
SOCIETE CIVILE S.P.I.D. 209, rue de l'Université
F-75007 Paris (FR)**
Inventeur : **Hamel, Roger
SOCIETE CIVILE S.P.I.D. 209, rue de l'Université
F-75007 Paris (FR)**

(74) Mandataire : **Pyronnet, Jacques et al
Société Civile S.P.I.D. 209 rue de l'Université
F-75007 Paris (FR)**

Jouve, 18, rue St-Denis, 75001 Paris, France

## Description

L'invention concerne un dispositif de protection contre l'effet Larsen dans un poste téléphonique à haut-parleur comportant d'une part dans la voie d'écoute des premiers moyens de régulation automatique du niveau d'écoute incorporant un circuit d'affaiblissement réglable, un amplificateur dont le gain $G_r$ est modifiable manuellement et un haut-parleur, d'autre part dans la voie d'émission un microphone, des deuxièmes moyens agissant sur le niveau de signal de la voie d'émission et un amplificateur de signaux de parole à gain $G_e$ généralement fixe, dispositif dans lequel est prévue une chaîne de commande qui reçoit le signal de sortie du microphone et qui agit sur lesdits premiers et deuxièmes moyens, les deux voies d'émission et d'écoute étant reliées à une ligne téléphonique par l'intermédiaire d'un circuit hybride.

L'invention concerne plus particulièrement un dispositif de protection contre l'effet Larsen dans lequel lesdits premiers moyens de régulation automatique du niveau d'écoute comportent, en plus d'un circuit d'affaiblissement réglable du signal vocal reçu, un modulateur de largeur d'impulsions qui fournit un signal formé d'impulsions modulées en largeur par le signal vocal fourni par le circuit d'affaiblissement réglable, un circuit détecteur de dépassement qui, à partir du signal fourni par le modulateur, engendre une impulsion de compression chaque fois qu'il est détecté que l'amplitude du signal vocal de modulation atteint un certain seuil, lesdites impulsions de compression étant appliquées audit circuit d'affaiblissement pour y commander la charge d'un circuit intégrateur qui fournit le signal de commande d'affaiblissement. De tels premiers moyens de régulation automatique du niveau d'écoute sont décrits dans la demande de brevet français n° 80 07 055 au nom de la demanderesse.

Plus précisément, l'invention s'applique à un poste téléphonique, dont l'utilisateur, qui est désigné dans la suite de la description par utilisateur I parle de préférence, lors de l'émission, près du microphone, le microphone étant physiquement séparable du poste qui comporte le haut-parleur et relié à ce dernier par un cordon électrique. Le microphone peut faire partie d'un combiné. Dans ce dernier cas, l'écouteur est disposé en dérivation sur la voie d'écoute, juste en amont des premiers moyens de régulation automatique d'écoute.

Dans ces conditions, et quel que soit le mode d'utilisation du poste téléphonique, on suppose dans ce qui suit que lorsque l'utilisateur II qui se trouve à l'autre extrémité de la ligne parle, sa voix est rendue par le haut-parleur avec un volume sonore tel qu'après transit dans l'air, ce volume sonore est perçu par le microphone à un niveau inférieur à celui de l'utilisateur I lorsque ce dernier parle aussi.

L'invention s'applique aussi à un téléphone dit « mains libres » pourvu que le découplage sonore entre microphone et haut-parleur soit suffisant pour que l'hypothèse indiquée au paragraphe précédent soit vérifiée. Cette condition de priorité des niveaux sonores en faveur de l'utilisateur I pour les signaux sonores injectés dans le microphone est d'autant plus facile à réaliser que la voie d'écoute comporte lesdits premiers moyens de régulation automatique d'écoute. On est ainsi assuré que quelle que soit la dispersion des niveaux du signal reçu de l'utilisateur II, ce signal incluant notamment les tonalités de la ligne, le niveau sonore émis par le haut-parleur est sensiblement constant, ce niveau étant par ailleurs réglable manuellement. De tels moyens de régulation automatique d'écoute sont connus par exemple de la publication : Review of the Electrical Communication Laboratories, Volume 27, numéros 5, 6, Mai-Juin 1979, pages 347-367 en référence à l'article : Model S-IP Loudspeaker Telephone Circuit Design, de K. KATO ET AL.

Dans un poste téléphonique en général, notamment dans un poste téléphonique tel que décrit en préambule il est pratiquement impossible d'éviter que le signal d'émission ne soit transmis à la voie d'écoute à travers le duplexeur (transformateur différentiel ou hybride par exemple). Il s'ensuit une réaction acoustique de boucle qui peut se traduire par un auto-amorçage d'oscillations dit aussi effet Larsen dans le cas où le gain de boucle est supérieur à 1 à une fréquence vocale qui correspond à la condition de phase nécessaire pour provoquer l'instabilité. Dans les conditions spécifiées ci-dessus, l'effet Larsen ne se produit en principe pas lorsque l'utilisateur I ou l'utilisateur II (ou les deux) parle(nt) du fait que dans ce cas les premiers moyens de régulation d'écoute reçoivent un signal de parole et affaiblissent automatiquement ce signal de façon telle que le gain de boucle devient inférieur à 1 dans la plupart des cas.

Par contre, le problème de l'effet Larsen se pose lorsque le (les) signal (signaux) de parole est (sont) absent(s) ou très faible(s). Si aucune mesure n'est prise pour contrecarrer l'effet Larsen, l'auto-oscillation s'amorce dans ce dernier cas, même en l'absence de bruit audible, du fait que les moyens de régulation automatique d'écoute, qui n'agissent que dans le sens de l'affaiblissement, ont alors un gain égal à 1 et que les gains préréglés $G_e$ et $G_r$ des deux amplificateurs de la boucle (d'émission et d'écoute) sont tels que, malgré les affaiblissements à travers le duplexeur et dans l'air, le gain de boucle est supérieur à 1. L'oscillation parasite peut donc s'amorcer et dès que son niveau à l'entrée des premiers moyens de régulation d'écoute dépasse un certain seuil de tension prédéterminé, de l'ordre de 10 mV, ces moyens commencent à agir sur l'amplitude de l'oscillation parasite et l'effet Larsen peut se maintenir, le niveau sonore de Larsen en sortie du haut-parleur étant limité audit niveau sensiblement constant choisi pour l'écoute. Cette limitation du niveau sonore du Larsen implique que les deux amplificateurs de la boucle ne sont alors pas saturés et l'oscillation parasite ainsi obtenue a une forme d'onde sensiblement sinusoïdale. Si par contre les amplificateurs étaient saturés comme c'est couramment le cas en présence d'effet Larsen, la forme d'onde obtenue serait assez éloignée de la sinusoïde, les amplificateurs ne fonctionnant plus dans leur zone de linéarité.

Lorsque lesdits premiers moyens de régulation automatique du niveau d'écoute comportent de préférence, en plus d'un circuit d'affaiblissement réglable du signal reçu d'un type connu, un modulateur de largeur d'impulsions et un circuit détecteur de dépassement agencés comme décrit ci-dessous, et que la voie d'émission agit sur une deuxième entrée de commande du circuit d'affaiblissement réglable, on constate que l'effet Larsen se traduit par un train de signaux sonores d'amplitude limitée, à une fréquence de l'ordre du hertz et tel que le niveau sonore en sortie du haut-parleur disparaît pratiquement entre deux signaux sonores adjacents, ce train évoquant un phénomène d'oscillations de relaxation.

Dans la plupart des dispositifs anti-Larsen connus, le but recherché est d'empêcher l'effet Larsen de s'établir, quelles que soient les positions relatives du haut-parleur et du microphone, la voie d'émission et la voie d'écoute n'étant par ailleurs jamais coupées. Ceci est obtenu en prélevant le signal respectivement sur la voie d'émission et sur la voie d'écoute, en fournissant ces signaux à un comparateur ou à un circuit de décision dont la sortie commande un ou plusieurs affaiblissements ou les amplificateurs disposés dans la voie d'émission et/ou d'écoute de façon que pour toutes les conditions possibles de parole à prévoir lors d'une communication, le gain de boucle soit maintenu inférieur à 1. Ces dispositifs présentent l'inconvénient de faire varier fortement les niveaux de signal de parole émis ou reçu.

Selon l'invention, les inconvénients de l'art antérieur sont réduits, le dispositif de protection contre l'effet Larsen défini en préambule étant remarquable en ce que lesdits premiers moyens de régulation automatique du niveau d'écoute comportent en outre un modulateur de largeur d'impulsions et un circuit détecteur de dépassement, que l'action desdits deuxièmes moyens consiste à soit réduire fortement de façon discrète soit maintenir le niveau du signal émis par le microphone, que ladite chaîne de commande agit sur lesdits deuxièmes moyens soit dans le sens du maintien du niveau du signal d'émission lorsque le signal reçu par le microphone a dépassé un premier niveau sonore-seuil $S_1$ soit dans le sens de la réduction du niveau de signal d'émission lorsque le niveau du signal sonore reçu par le microphone est trop faible, le signal sonore dû à l'utilisateur lointain à l'entrée du microphone étant supposé inférieur à $S_1$ et le signal sonore dû à l'utilisateur proche étant supposé appartenir à une gamme qui comprend le seuil $S_1$, et que pendant le temps où ladite chaîne de commande agit dans le sens du maintien du niveau du signal d'émission, elle agit aussi sur lesdits premiers moyens de régulation automatique du niveau d'écoute en activant ledit circuit d'affaiblissement dans le sens d'un affaiblissement de valeur prédéterminée, en introduisant un signal de compression additionnel $S_0$.

Par l'expression : « réduire fortement de façon discrète le niveau du signal émis », il faut entendre une réduction ou une désactivation qui peut aller dans un mode de réalisation de l'invention jusqu'à la coupure de la voie d'émission. Dans ce cas, l'expression : « maintenir le niveau du signal d'émission », doit être comprise comme le rétablissement ou l'activation de la voie d'émission après coupure. Il faut noter que même dans ce dernier cas, il ne s'agit pas d'une commutation de la parole dans l'un ou l'autre sens de communication comme c'est le cas dans un système d'interphone par exemple. En effet, selon l'invention, les utilisateurs I et II peuvent parler en même temps sans qu'il en résulte une gêne sensible due à une variation indésirable des niveaux sonores reçus. D'autre part, la naissance de l'effet Larsen demeure possible, en l'absence de parole, mais cet effet Larsen est alors immédiatement supprimé de façon durable, comme on le verra ci-dessous.

Selon un mode de réalisation préféré de l'invention, le dispositif de protection contre l'effet Larsen défini au deuxième paragraphe de la présente description est remarquable en ce que ladite chaîne de commande agit sur lesdits deuxièmes moyens soit dans le sens du maintien du niveau du signal d'émission lorsque le signal sonore reçu par le microphone a dépassé un premier niveau sonore-seuil $S_1$ et demeure ensuite à un niveau supérieur à un deuxième niveau sonore-seuil $S_2$ inférieur ou égal à $S_1$, soit dans le sens de la réduction du niveau du signal d'émission lorsque le niveau sonore reçu par le microphone est descendu pendant un temps prédéterminé en dessous du seuil $S_2$, le signal sonore dû à l'utilisateur proche étant supposé compris dans une gamme sonore supérieure au seuil $S_2$.

Dans ce mode de réalisation, on met à profit le fait que l'effet Larsen peut se présenter sous forme d'un train de signaux sonores, le niveau sonore étant très faible entre deux signaux sonores adjacents, ce qui permet, juste après l'apparition du premier signal sonore du train de signaux Larsen, que ladite chaîne provoque en substance la coupure de la voie d'émission, par l'intermédiaire desdits deuxièmes moyens.

La description suivante en regard des dessins annexés le tout donné à titre d'exemple, fera bien comprendre comment l'invention peut être réalisée.

La figure 1 est un schéma synoptique simplifié du dispositif de protection contre l'effet Larsen selon l'invention.

La figure 2 est un schéma détaillé des premiers moyens de régulation automatique du niveau d'écoute comportant un circuit d'affaiblissement réglable, un modulateur de largeur d'impulsions et un circuit détecteur de dépassement.

La figure 3 est un schéma synoptique du mode de réalisation préféré du dispositif selon l'invention.

La figure 4 est un schéma synoptique d'une partie de la chaîne de commande desdits deuxièmes moyens.

La figure 5 est un diagramme de temps de certains signaux sur la chaîne de commande.

La figure 6 est un diagramme de tensions permettant d'expliciter le fonctionnement du dispositif de protection contre l'effet Larsen selon l'invention.

Sur les figures les mêmes références désignent les mêmes éléments avec les mêmes fonctions.

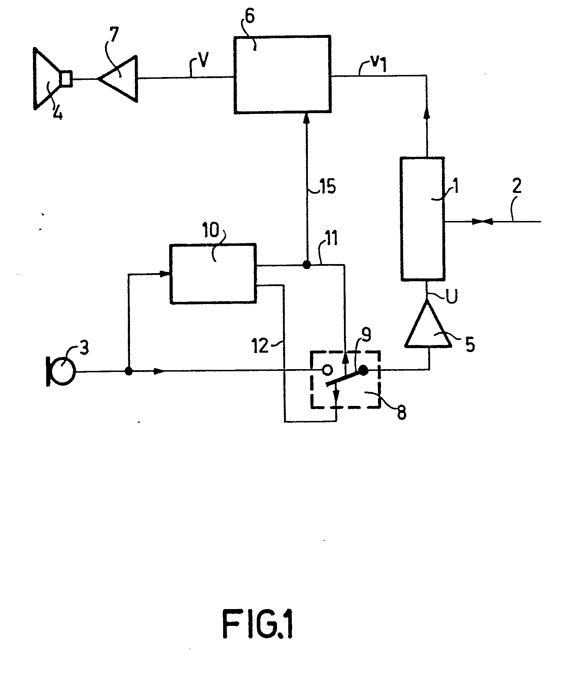

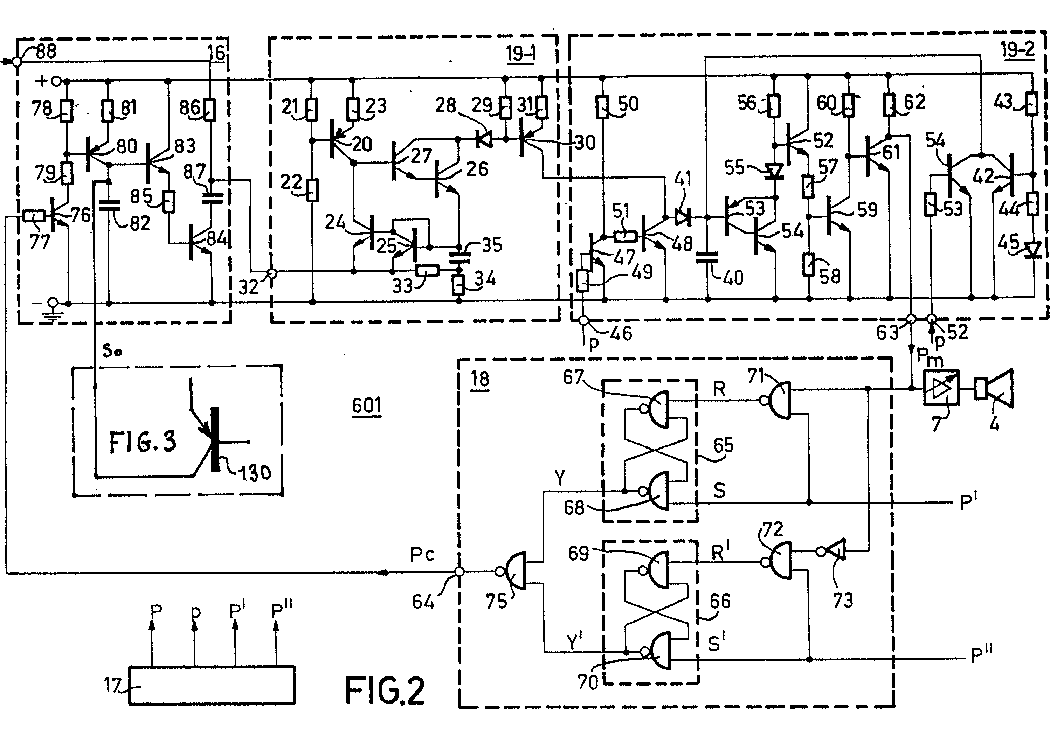

Sur la figure 1 montrant le schéma synoptique d'un poste téléphonique muni du dispositif anti-Larsen selon l'invention, le circuit de couplage 1, appelé aussi circuit hybride, couple la ligne téléphonique 2 à la voie d'émission du poste munie du microphone 3 et à la voie d'écoute du poste munie du haut-parleur 4. La voie d'émission est munie d'un amplificateur de microphone 5 de gain $G_e$ de préférence fixe et la voie d'écoute comporte entre la jonction hybride et le haut-parleur des premiers moyens de régulation automatique du niveau d'écoute 6 qui fournissent à l'amplificateur de haut-parleur 7, un signal représentatif du signal vocal régulé avec un niveau fixe. L'amplificateur 7 a un gain $G_r$ réglable qui est fixé par l'usager pour lui assurer un niveau d'écoute confortable, dépendant peu du niveau du signal reçu grâce au régulateur de niveau 6. Le régulateur de niveau 6 est de préférence un régulateur de niveau de type décrit ci-dessous en référence à la figure 2 et noté 601 dans la suite de la description. La voie d'émission comporte en outre des deuxièmes moyens 8 pour soit réduire fortement de façon discrète soit maintenir le niveau du signal émis par le microphone 3.

Sur la figure 1, ces deuxièmes moyens sont représentés très schématiquement par un interrupteur 9. En pratique, l'interrupteur 9 est de préférence un transistor qui fonctionne en saturé-bloqué. De préférence, ce transistor comporte une résistance dans son collecteur, disposée en série entre la sortie du microphone et son collecteur. Les deuxièmes moyens 9 sont commandés par une chaîne 10 qui reçoit le signal de sortie du microphone, dans le sens du maintien du niveau du signal d'émission lorsque le signal sonore reçu par le microphone a dépassé un premier niveau sonore-seuil $S_1$ et demeure ensuite à un niveau supérieur à un deuxième niveau sonore-seuil $S_2$ inférieur ou égal à $S_1$, ce qui est indiqué par la ligne 11, ou dans le sens de la réduction du niveau de signal d'émission lorsque le niveau du signal sonore reçu par le microphone est descendu pendant un temps prédéterminé en dessous du seuil $S_2$, ce qui est indiqué par la ligne 12. D'autre part, un conducteur 15 agit, lorsque la ligne 11 est activée, sur le régulateur de niveau 6 en activant le circuit d'affaiblissement réglable de ce dernier dans le sens d'un affaiblissement de valeur prédéterminée.

La figure 2 est le schéma détaillé d'un régulateur de niveau 601 dont le fonctionnement est décrit avec plus de détails dans la demande de brevet n° 80 07 055 au nom de la demanderesse.

Le régulateur de niveau 601 comporte un modulateur de largeur d'impulsions 19. Ce modulateur 19 comporte une première partie 19-1 dans laquelle est élaboré le courant de somme $I_o + I_m$, $I_o$ étant un courant continu d'amplitude constante et $I_m$ étant un courant correspondant au signal vocal reçu et affaibli par le circuit d'affaiblissement réglable 16. Dans la deuxième partie 19-2 du modulateur sont formées des impulsions modulées en largeur par le signal de somme $I_o + I_m$ et formant le signal modulé $P_m$.

La première partie 19-1 du modulateur comporte un transistor pnp 20 dont la base est polarisée par le pont de résistances 21 et 22, qui comporte une résistance d'émetteur 23 et qui injecte un courant continu fixe $i_o$ à l'entrée d'un miroir de courant d'un type connu en soi formé par les transistors npn 24, 25, 26 et 27 connectés comme l'indique la figure. Si ce miroir de courant est construit pour procurer un rapport de courant de 1 (transistors 24 et 25 identiques), le courant continu $i_o$ apparaît à la sortie du miroir de courant, sortie qui est constituée par le collecteur des transistors 26 et 27. Ce courant continu $i_o$ traverse la diode 28 et la résistance 29. On peut noter que le transistor 26 est connecté avec le transistor npn 27 selon le montage de Darlington pour former un transistor composite pouvant être commandé par un courant très faible, qui est le courant de base du transistor 27, prélevé sur le courant de collecteur du transistor 20. La tension continue aux bornes de la résistance 29, procurée par le courant continu $i_o$, détermine un courant continu $I_o$ dans le collecteur du transistor pnp 30.

Par ailleurs entre la borne d'entrée 32 du modulateur 9 et la borne négative d'alimentation est appliquée une tension variable correspondant au signal vocal et élaborée dans le circuit d'affaiblissement variable 16, comme on l'expliquera par la suite. La borne 32 est reliée aux émetteurs des transistors 24 et 25 formant un miroir de courant et à une extrémité du pont de résistances 33 et 34, dont l'autre extrémité est reliée à la borne d'alimentation négative. La tension variable aux bornes de la résistance 34 est transmise, par l'intermédiaire du condensateur 35, sur l'émetteur du transistor 26 et détermine dans l'espace émetteur-collecteur de ce dernier un courant variable $i_m$ qui s'ajoute au courant continu $i_o$. Il en résulte finalement dans le collecteur du transistor 30 un courant variable $I_m$ qui s'ajoute au courant continu $I_o$. Dans le courant de somme $I_o + I_m$ ainsi formé, le courant variable $I_m$ correspond au signal vocal.

Ce courant de somme $I_o + I_m$ est utilisé dans la deuxième partie 19-2 du modulateur pour charger le condensateur 40 via la diode 41, un courant continu de décharge $I_d$ de ce condensateur étant produit en permanence sur le collecteur du transistor npn 42 dont la base est polarisée au moyen du pont formé par les résistances 43, 44 et la diode 45. Le courant de charge du condensateur 40 est donc finalement $I_c = I_o + I_m - I_d$ et cette charge se produit pendant la durée des impulsions positives du signal P qui est appliqué, via la borne 46 du modulateur, par le circuit de commande 17, au montage en cascade des deux transistors npn 47 et 48, accompagné des résistances usuelles 49, 50 et 51. On voit aisément que pendant la durée des impulsions positives du signal P, le transistor 47 est saturé, le transistor 48 est bloqué et le

0 039 109

condensateur 40 est chargé par le courant $I_c = I_o + I_m - I_d$. Pendant les intervalles entre les impulsions positives du signal P, le transistor 47 est bloqué, le transistor 48 est saturé et le condensateur 40 est déchargé par le courant continu $I_d$. Enfin le condensateur 40 peut être déchargé brusquement et complètement pendant la durée des impulsions positives du signal p, qui sont appliquées via la borne 52 et la résistance 53 à la base du transistor npn 54 pour saturer ce dernier.

Les signaux de commande P et p sont engendrés dans le générateur de signaux de commande 17. Les impulsions du signal p se produisent juste avant celles du signal P. Des impulsions modulées en largeur sont ainsi formées à partir de la tension aux bornes du condensateur 40 comme on va l'expliquer.

D'après le schéma de la figure 2, on voit que la tension sur le condensateur 40 est reproduite sur l'émetteur du transistor npn 52 par l'intermédiaire du transistor composite formé par les transistors pnp 53 et npn 54 connectés ensemble et avec la diode 55 et la résistance 56 comme l'indique la figure. Cette tension sur l'émetteur du transistor 52 est appliquée au pont diviseur de tension formé par les résistances 57 et 58. La borne intermédiaire de ce pont est reliée à la base du transistor npn 59 et le rapport des résistances 57 et 58 est choisi pour que le transistor 59 soit débloqué lorsque la tension aux bornes du condensateur 40 est plus élevée qu'une tension de seuil prédéterminée $V_S$ et soit bloqué dans le cas contraire. Le collecteur du transistor 59 est muni d'une résistance 60 et est relié à la base du transistor npn 61 qui a un fonctionnement exactement inverse de celui du transistor 59. Sur le collecteur du transistor 61, muni d'une résistance 62 et relié à la borne de sortie 63 du modulateur 19, on obtient donc un signal modulé $P_m$ qui est positif lorsque la tension du condensateur 40 est supérieure à la tension de seuil $V_S$ et qui est nul dans le cas contraire. La position du flanc descendant du signal $P_m$ par rapport à la position de ce flanc pour $I_m = 0$ indique le signe et l'amplitude du courant variable $I_m$ pendant la durée courte des impulsions du signal de commande P. Il est avantageux que la tension de seuil $V_S$ soit juste égale à la tension $V_{c2}$ obtenue sur la condensateur 40 à la fin d'une impulsion du signal P, pour la valeur extrême négative $- I_{ml}$ du courant variable $I_m$. Il est également avantageux que pour la valeur extrême positive $I_{ml}$ du courant variable $I_m$, la tension décroissante par le condensateur 40 atteigne la tension de seuil $V_S$ juste à l'instant où commence une impulsion du signal p qui remet à zéro la tension du condensateur 40. Ces conditions sont supposées réalisées pour le dispositif de la figure 2.

Il est clair alors que pour tout le domaine des valeurs du courant variable $I_m$, entre $- I_{ml}$ et $I_{ml}$, le flanc descendant du signal $P_m$ se déplace dans l'étendue maximum possible, entre la fin d'une impulsion du signal P et le début d'une impulsion du signal p et est en relation linéaire avec le courant variable $I_m$. On peut noter ici que le flanc montant des impulsions du signal $P_m$ se déplace légèrement (à l'intérieur d'une impulsion du signal P) lorsque le courant variable $I_m$ couvre son domaine de $- I_{ml}$ à $+ I_{ml}$. Il en résulte une modulation parasite de la largeur des impulsions du signal $P_m$, qui est sans importance pour le dispositif de régulation de niveau dans lequel on n'utilise que le flanc descendant des impulsions du signal $P_m$ pour détecter un dépassement d'amplitude du courant variable $I_m$.

Le signal modulé $P_m$ disponible sur la borne 63 du modulateur 19 est appliqué au circuit de détection de dépassement de niveau 18 qui a pour fonction de fournir à sa sortie 64 un signal de compression $P_c$ dans lequel apparaît une impulsion de compression chaque fois qu'il est détecté que l'amplitude positive ou négative du courant variable $I_m$ atteint ou dépasse en valeur absolue un seuil prédéterminé. Cette détection est basée sur la position du flanc descendant du signal modulé $P_m$. On utilise à cet effet deux signaux impulsionnels P' et P''. Les impulsions des signaux P' et P'' sont situées vers les deux extrémités du domaine où peut se déplacer le flanc descendant du signal modulé $P_m$. Le dispositif de détection de dépassement 18 fournit une impulsion de compression quand ce flanc descendant atteint ou dépasse les positions des impulsions P' ou P''.

Sous la forme de réalisation montrée sur la figure 2, ce circuit de détection de dépassement 18 comporte deux bascules de type RS 65 et 66 formées de façon usuelle au moyen des portes NON-ET 67, 68 et 69, 70. A l'entrée R de la bascule 65 est connectée la sortie de la porte NON-ET 71 qui reçoit les signaux $P_m$ et P' ; à l'entrée S de cette bascule 65 est appliqué le signal P'. A l'entrée R' de la bascule 66 est connectée la sortie de la porte NON-ET 72 qui reçoit le signal P'' et le signal $\overline{P_m}$, complémentaire de $P_m$ et formé au moyen du circuit inverseur 73 ; à l'entrée S' de cette bascule 66 est appliqué le signal P''. Les sorties Y et Y' des deux bascules sont reliées aux deux entrées de la porte NON-ET 75 dont la sortie est connectée à la sortie 64 du circuit de détection de dépassement 18 pour fournir le signal de compression $P_c$.

Les flancs descendants du signal modulé $P_m$ peuvent se produire pendant les impulsions du signal P'. Dans ce cas, le signal Y à la sortie de la bascule 65 est complémentaire du signal P', le signal Y' à la sortie de la bascule 66 est égal à « 1 » et il apparaît dans le signal $P_c$ fourni par la porte NON-ET 75, une impulsion de compression coïncidant avec l'impulsion du signal P'.

Les flancs descendants du signal modulé $P_m$ peuvent aussi se produire avant les impulsions du signal P''. Dans ce cas, le signal Y reste égal à « 1 », le signal Y' est complémentaire du signal P'' et il apparaît dans le signal $P_c$ une impulsion de compression coïncidant avec l'impulsion du signal P''.

Dans le circuit 16, le signal de compression $P_c$ est appliqué à la base du transistor npn 76 muni d'une résistance de base 77 et des résistances de collecteur en série 78 et 79. Le transistor pnp 80 a sa base connectée entre les résistances 78 et 79. Il est muni d'une résistance d'émetteur 81 et son collecteur est relié au condensateur 82. Chacune des impulsions de compression du signal $P_c$ qui indiquent un dépassement de l'amplitude du courant variable $I_m$ correspondant au signal vocal, sert à charger le

5

condensateur 82. La tension sur le condensateur 82 sert à commander le courant dans le transistor npn 83 dont le courant d'émetteur est appliqué sur la base du transistor npn 84 par l'intermédiaire de la résistance 85. Les transistors 83 et 84 sont de plus en plus conducteurs au fur et à mesure que le condensateur 82 se charge et présentent donc une impédance de plus en plus faible pour le signal vocal reçu provenant de la borne d'entrée 88 du circuit d'affaiblissement et qui est appliqué au collecteur du transistor 84 par l'intermédiaire de la résistance 86 et du condensateur de liaison 87. Le signal vocal disponible entre la résistance 86 et le condensateur 87 est donc corrigé dans le sens d'un affaiblissement quand un dépassement d'amplitude est détecté par le circuit 18. C'est ce signal qui est appliqué à l'entrée 32 du modulateur de largeur d'impulsions 19.

On peut remarquer que le condensateur 82 est chargé pendant les impulsions de compression par un courant relativement élevé, le courant de collecteur du transistor 80, et est déchargé par un courant faible, le courant de base du transistor 83 qui peut être avantageusement un transistor composite. Il en résulte que la tension sur le condensateur 82 suit rapidement les dépassements d'amplitude du signal vocal lors de l'attaque des syllabes et suit avec un certain retard les diminutions d'amplitude. Finalement la tension aux bornes du condensateur 82 se stabilise autour d'une valeur moyenne déterminant un niveau sensiblement constant du signal vocal.

Le générateur 17 des signaux de commande P, P', P'', P peut être aisément construit par l'homme de l'art et n'a pas besoin d'être décrit en détail. Le signal P doit être formé d'impulsions de durée courte ; sa fréquence doit être relativement élevée par rapport à la fréquence maximale du signal vocal. La fréquence des impulsions du signal P peut être par exemple de 20 kHz et la durée de chaque impulsion être égale à 1/20 d'une période correspondant à une fréquence de 20 kHz. Dans les autres signaux p, P', P'' les impulsions ont la même fréquence et la même durée, et sont décalées par rapport au signal P.

Pour exciter le haut-parleur 4 il est avantageux d'utiliser le signal modulé $P_m$, ce qui conduit à un amplificateur de haut-parleur 7 qui peut être réalisé d'une manière très simple. Il peut être de classe D, c'est-à-dire avoir un rendement élevé. Dans cet amplificateur le signal modulé $P_m$ est d'abord traité pour éliminer la modulation parasite qui, comme on l'a déjà indiqué, est due au fait que le front montant du signal $P_m$ n'a pas une position rigoureusement fixe. Il peut être constitué essentiellement par quatre transistors montés en amplificateur suiveur symétrique double dont la charge est constituée par le haut-parleur 4. Ce haut-parleur joue le rôle d'un filtre passe-bas et n'est pratiquement sensible qu'à la modulation contenue dans le signal $P_m$ (préalablement débarrassé de sa modulation parasite), c'est-à-dire au signal vocal, et est insensible aux composantes à fréquences élevées (20 kHz et ses harmoniques) contenues dans le signal $p_m$. Le niveau sonore fourni par le haut-parleur 4 peut être réglé en faisant varier la tension de polarisation de la base d'un transistor d'alimentation des quatre transistors constituant l'amplificateur suiveur symétrique double.

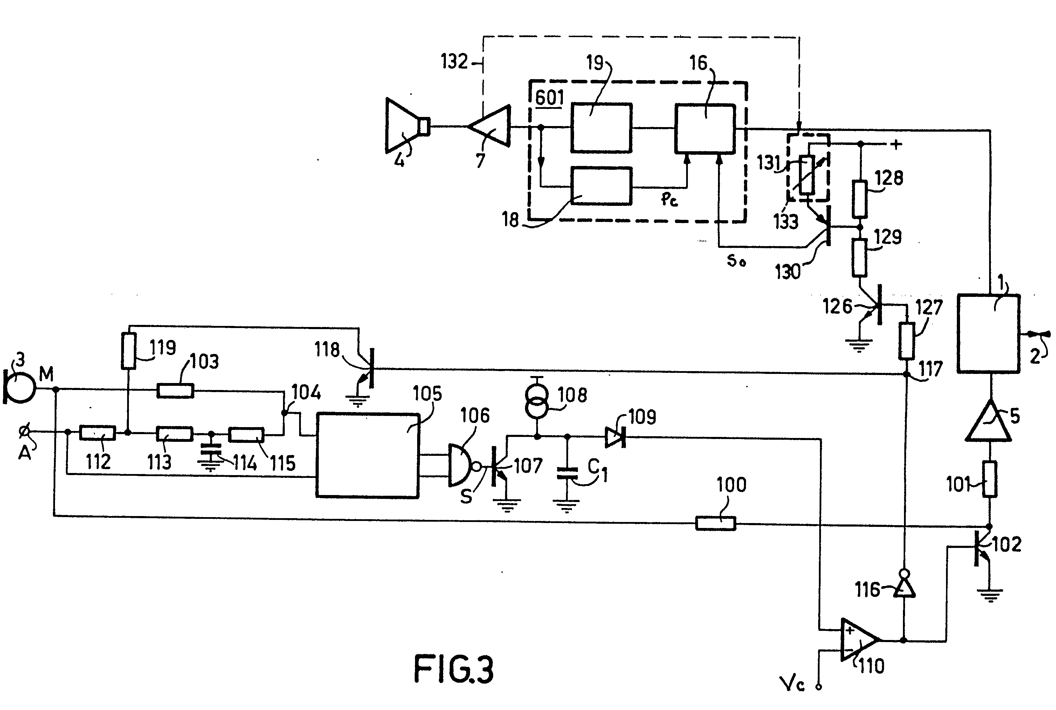

Lorsqu'un tel régulateur de niveau 601 est utilisé, de préférence, alors que la voie d'émission est établie, et que cette dernière agit sur la charge du condensateur 82 comme décrit ci-dessous, on constate que l'effet Larsen prend naissance, en l'absence de parole, mais sans saturer l'amplificateur d'écoute 7, et que, de plus cet effet est évanescent c'est-à-dire qu'il s'affaiblit de lui-même jusqu'à un niveau sonore pratiquement inaudible puis reprend naissance, ceci avec une fréquence de l'ordre du Hertz. Ceci est vrai surtout pour des distances faibles entre le haut-parleur et le microphone et/ou lorsque ces derniers sont tournés l'un vers l'autre, c'est-à-dire lorsque le gain de boucle est à coup sûr supérieur à 1 en l'absence de signal sonore. Dans ces conditions, la première chaîne de commande décrite ci-dessous en référence à la figure 3 peut couper la voie d'émission juste après la première oscillation Larsen et supprimer ainsi l'effet Larsen dès sa renaissance. Afin de permettre au régulateur de niveau 601 d'agir brusquement dans le sens d'une diminution du gain de boucle, ce qui favorise l'apparition de Larsen évanescent, la chaîne de commande agit sur le circuit d'affaiblissement réglable 16 dans le sens d'un affaiblissement de valeur prédéterminée, pendant le même temps qu'elle agit dans le sens du maintien du niveau d'émission. Un tel agencement constitue le mode de réalisation préféré de l'invention décrit ci-dessous en référence à la figure 3.

A la figure 3, le signal de sortie du microphone, référencé M, est transmis à l'amplificateur d'émission 5 par l'intermédiaire des résistances 100 et 101 disposées en série et, en parallèle, à la masse, via la résistance 100 et le trajet collecteur-émetteur du transistor npn 102 qui correspond à l'organe 8 de la figure 1 (deuxièmes moyens). Lorsque le transistor 102 est saturé, la voie d'émission est pratiquement coupée, et lorsqu'il est bloqué, la voie d'émission est établie. La polarisation de la base du transistor 102 est commandée par une chaîne constituée, à partir de la sortie du microphone par une résistance 103 un point de branchement 104, un organe logique 105, un circuit porte NON-ET 106 qui délivre un signal S sur la base d'un transistor npn 107 dont le collecteur est relié à une source de courant 108 et l'émetteur à la masse, un condensateur $C_1$ branché entre la source de courant 108 et la masse, une diode 109 et l'entrée positive (non inverseuse) d'un amplificateur différentiel 110 qui reçoit un niveau de tension constant sur son entrée négative (inverseuse) et dont la sortie est reliée à la base du transistor 102. Un signal auxiliaire A est fourni directement à une deuxième entrée de l'organe 105 et par l'intermédiaire de résistances 112, 113, d'un condensateur 114 branché en dérivation à la masse et d'une résistance 115, au point de branchement 104. D'autre part, la sortie de l'amplificateur différentiel est reliée, par l'intermédiaire d'un inverseur 116, du point de branchement 117, du trajet base-collecteur d'un transistor npn 118 et d'une résistance 119 au point qui est commun aux résistances 112 et 113.

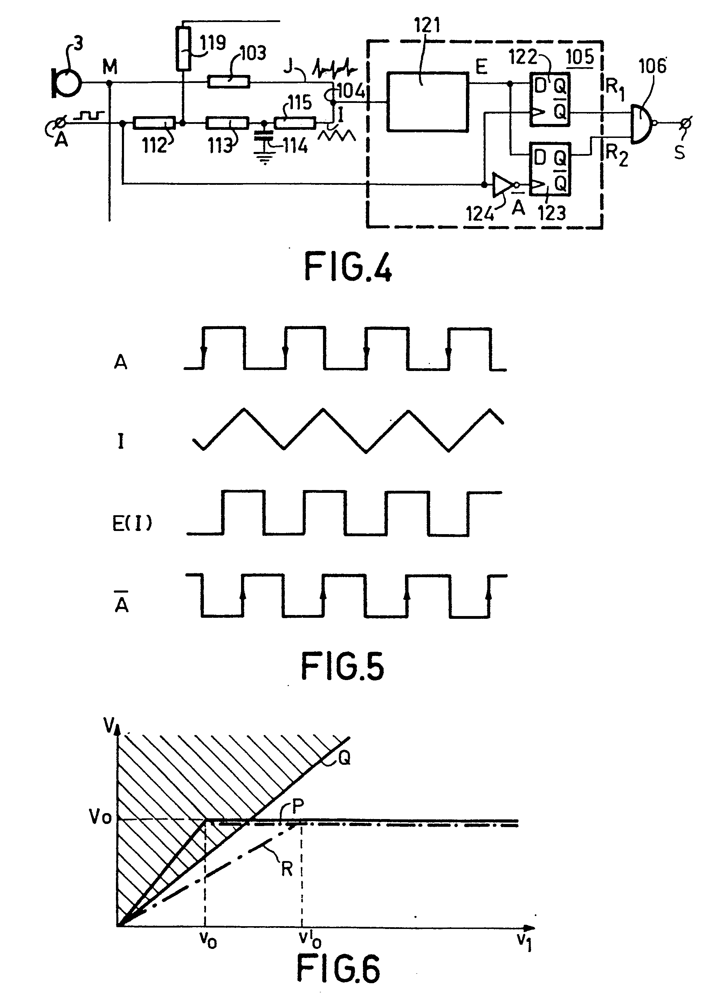

Le fonctionnement de la première chaîne de commande est expliqué ci-dessous en référence aux figures 4 et 5.

La figure 4 donne le détail de l'organe 105 qui est constitué par un écrêteur 121 et deux bascules D 122 et 123. L'entrée de l'écrêteur est reliée au point 104 et sa sortie qui est le siège d'un signal E à l'entrée des bascules 122 et 123. Le signal auxiliaire A est fourni directement à l'entrée d'horloge de la bascule 122 et par l'intermédiaire d'un inverseur 124 à l'entrée d'horloge de la bascule 123. Les entrées du circuit porte NON-ET 106 sont reliées respectivement à la sortie $\overline{Q}$ de la bascule 122 et à la sortie Q de la bascule 123. Les résistances 103, 112, 115, 119 réalisent une adaptation d'impédances des différents circuits.

Le signal A représenté à la figure 5 est un signal carré. Après intégration réalisée par le circuit RC 113, 114, on obtient en sortie de la résistance 115 un signal triangulaire I déphasé de $\Pi/2$ par rapport au signal A. En 104, soit le signal I, soit le signal J, issu du signal de parole M est prépondérant selon leurs amplitudes respectives. On suppose dans un premier temps que c'est le signal I, issu de A, qui domine. Après écrêtage en 121, on obtient le signal E(I) représenté à la figure 5, qui est un signal carré en phase avec le signal I, c'est-à-dire en retard de $\Pi/2$ par rapport au signal A. Etant donnés les branchements des bascules 122 et 123, il est clair que la sortie $\overline{Q}$ de 122 délivre un signal logique $R_1 = 1$ et que la sortie Q de 123 délivre aussi un signal logique $R_2 = 1$. En conséquence la sortie S du circuit 106 est portée à une tension nulle, le transistor 107 (figure 3) est bloqué et la source de courant 108 charge le condensateur $C_1$. Au-delà d'une charge prédéterminée de $C_1$ la diode 109 devient passante, la sortie de l'amplificateur différentiel 110 est maintenue à une tension continue positive et le transistor 102 est saturé, c'est-à-dire que l'émission est pratiquement coupée. Il faut noter que dans cette situation qui correspond à un signal sonore faible ou nul à l'entrée du microphone 3, le point 117 est le siège d'une tension nulle, grâce au circuit inverseur 116, que le transistor 118 est bloqué et qu'aucun courant ne traverse la résistance 119.

Si à partir de la situation décrite ci-dessus le niveau sonore reçu par le microphone s'élève, lorsque ce niveau dépasse un seuil $S_1$ de valeur prédéterminée, le signal J (voir figure 4) devient prépondérant devant le signal I et le signal de sortie E de l'écrêteur 121 présente des fronts montants et descendants dont la distribution dans le temps est aléatoire. Il s'ensuit l'apparition de zéros logiques sur l'entrée $R_1$ et/ou l'entrée $R_2$ du circuit-porte NON-ET 106, ce qui se traduit chaque fois par un « 1 » à la sortie S de 106, c'est-à-dire par la saturation du transistor 107 et la décharge rapide du condensateur $C_1$ via le trajet collecteur-émetteur du transistor 107. La diode 109 n'est alors plus passante, l'entrée négative de l'amplificateur différentiel 110 qui est à une tension fixe devient prépondérante, la sortie de cet amplificateur devient négative, ce qui bloque le transistor 102 et débloque le transistor 118. Le transistor 102 étant bloqué, la voie d'émission est établie et, simultanément, le transistor 118 étant saturé, un courant traverse la résistance 119. Le signal auxiliaire A est ainsi affaibli, puisqu'une partie est dérivée via le trajet collecteur-émetteur du transistor 118, si bien que le signal sonore à l'entrée du microphone peut se maintenir en dessous du seuil $S_1$, le signal J restant prépondérant devant le signal I. On crée ainsi une Hystérésis, cette situation se maintenant jusqu'à ce que le signal sonore descende en dessous d'un deuxième seuil prédéterminé $S_2$ inférieur à $S_1$.

En pratique, lorsque la voie d'émission est coupée, il suffit que l'utilisateur I parle normalement pour que la voie d'émission s'établisse à nouveau. Ceci a lieu très rapidement, en quelques millisecondes, lors de l'attaque de la première syllabe de chaque mot. Il n'en résulte donc aucune gêne pour l'utilisateur II.

L'hystérésis créée à partir des niveaux sonores-seuils $S_1$ et $S_2$ permet de maintenir la voie d'émission malgré une irrégularité de hauteur de son que l'on observe entre les syllabes et les mots de la part de l'utilisateur I. La gamme d'amplitudes des sons émis est supérieure au seuil $S_2$ et englobe le seuil $S_1$. D'autre part, lorsque l'utilisateur I et/ou l'utilisateur II parle(nt), le régulateur de niveau d'écoute 601 fonctionne en affaiblissant le signal qu'il reçoit, de telle façon que le gain de boucle est inférieur à 1 dans la plupart des cas et que l'effet Larsen ne peut alors pas se produire. L'effet Larsen ne peut pas non plus se produire lorsque la voie d'émission est coupée par la première chaîne de commande. Le seul instant où l'effet Larsen peut se produire est l'instant très bref où le son à l'entrée du microphone cesse et où la voie d'émission n'est pas encore coupée ou bien à la suite d'un léger choc sur le microphone qui a rétabli la voie d'émission. Comme on l'a déjà dit, l'effet Larsen qui apparaît alors est évanescent, dû entre autres à la présence du régulateur de niveau d'écoute 601, et après sa première apparition, la première chaîne de commande, en l'absence de son coupe la voie d'émission, et par là même, empêche l'effet Larsen, qui se présenterait sinon sous forme récurrente, de renaître. Selon ce mode de réalisation, on fait en sorte que l'effet Larsen se présente sous forme évanescente quelles que soient les positions relatives du haut-parleur et du microphone dans une gamme de distances rapprochées ou qu'il ne puisse pas naître en rendant le gain de boucle inférieur à 1, lorsque haut-parleur et microphone sont relativement éloignés l'un de l'autre (dans ce dernier cas, en effet, l'oscillation parasite de Larsen pourrait naître et se maintenir, à une amplitude sensiblement constante, du fait que le niveau sonore obtenu à l'entrée du microphone serait supérieur au seuil $S_2$). La fonction définie dans la phrase qui précède est symbolisée par la liaison 15 sur la figure 1 et réalisée, sur la figure 3, par la chaîne qui relie le point de branchement 117 au circuit d'affaiblissement réglable 16. Cette chaîne comporte à partir du point 117 une résistance 127, le trajet base-collecteur d'un transistor npn 126 dont l'émetteur est relié à la masse, une résistance 129, le trajet base-collecteur d'un transistor pnp 130 dont l'émetteur est relié à la borne d'alimentation positive

0 039 109

par une résistance 131 et le collecteur au collecteur du transistor pnp 80 (voir figure 2). La base du transistor 130 est reliée à la borne d'alimentation positive par l'intermédiaire d'une résistance 128. Lorsque le point 117 est porté à une tension positive (voie d'émission établie), la chaîne décrite ci-dessus charge le condensateur 82 (figure 2). Le signal sous forme d'impulsions de longue durée au point 117 agit donc en parallèle au signal $P_c$ qui se présente sous la forme d'impulsions de compression de courte durée. Les composants 126 à 131 sont homologues des composants 76 à 81, ils sont agencés de la même façon et remplissent la même fonction ; cependant, le courant de collecteur du transistor 130 doit être réglé à une valeur plus faible que le courant de collecteur du transistor 80. Ce réglage est effectué au moyen de la résistance 131. On établit ainsi un signal de compression supplémentaire de valeur déterminée, noté $S_o$, signal de compression qui ne correspond à aucun signal sonore ou plus précisément à un signal sonore fictif qui serait reçu par le microphone. Ce signal $S_o$ est en effet conçu de telle façon qu'il soit l'équivalent du signal de compression qui serait apparu dans la boucle, en l'absence de la chaîne 126 à 131, si le microphone avait reçu un signal sonore de niveau déterminé.

L'introduction du signal $S_o$ présente le léger inconvénient que lorsque l'utilisateur II parle et que le niveau de signal de parole est très faible à l'entrée du régulateur de niveau d'écoute 601, le niveau sonore à la sortie du haut-parleur est plus faible que le niveau réglé à une valeur fixe par le régulateur 601 qui ne recevrait pas ce signal $S_o$. Cependant, cette différence n'est plus décelable lorsque le niveau de signal de parole de l'utilisateur II et/ou de l'utilisateur I est normal ou élevé et par ailleurs il faut noter que pendant la plus grande partie du temps où l'utilisateur II parle seul, la voie d'émission est normalement coupée, étant donné que le son régulé émis par le haut-parleur a un niveau sonore inférieur à $S_1$ à l'entrée du microphone.

D'autre part, le temps d'action de la première chaîne de commande et de la chaîne 126 à 131 étant très rapide, dû au temps très court d'activation (établissement) de la voie d'émission, l'introduction du signal $S_o$ ne perturbe en rien les régimes transitoires de la voie d'écoute qui sont choisis volontairement plus longs de l'ordre de la durée d'une syllabe. D'autre part la constante de temps de désactivation de la voie d'émission est de l'ordre de 100 ms, si bien que lorsque le signal de compression $S_o$ disparaît, l'affaiblissement qu'il apportait dans la voie d'écoute disparaît non avec cette constante de temps d'environ 100 ms mais avec la constante de temps syllabique nettement plus longue de la voie d'écoute. Cela signifie qu'il est possible, selon l'invention, d'activer et de désactiver la voie d'émission sans influer sur la rapidité avec laquelle le niveau d'écoute est diminué par rapport au niveau constant prédéterminé ou avec laquelle ce niveau constant est rétabli. Le confort d'écoute n'est donc pas perturbé par l'existence du signal $S_o$ en ce qui concerne les régimes transitoires dus à l'apparition ou à la disparition du signal $S_o$.

Pour mieux expliquer le fonctionnement du dispositif de protection contre l'effet Larsen, on peut faire le raisonnement ci-dessous en partant des hypothèses et des notations suivantes, avec référence à la figure 1 :

$\alpha$ : facteur d'atténuation de l'hybride 1 ;

$\beta$ : facteur d'atténuation acoustique entre le haut-parleur 4 et le microphone 3, dépendant de la distance relative et de l'orientation des éléments 3 et 4 ;

$G_r$ $P_o$ : pression acoustique moyenne maximum donnée par le haut-parleur quand la tension de sortie du régulateur de niveau 6 est à son maximum ;

$P_o$ : pression de parole moyenne maximum au niveau de la bouche de l'utilisateur I ;

$\beta_o$ : facteur d'atténuation acoustique entre la bouche de l'utilisateur I et le microphone ;

$U_o$ : tension moyenne de sortie maximum à la sortie de l'amplificateur d'émission 5 quand l'utilisateur I parle ;

$S_o$ : facteur d'atténuation introduit en 6 lors de la fermeture de la voie d'émission.

On démontre en premier lieu que la voie d'émission étant établie alors que l'utilisateur II parle seul, la tension U en sortie de l'amplificateur 5 a pour valeur :

$$U = U_o(\beta_o/\beta)\ G_r$$

Par suite, la tension $v_1$ en sortie de l'hybride 1 s'exprime par :

$$v_1 = U/\alpha = (U_o/\alpha) \cdot (\beta_o/\beta) \cdot G_r$$

Après la compression supplémentaire $S_o$, la tension $v_1$ se transforme en :

$$v = v_1/S_o = (U_o G_r \beta_o)/(\alpha\beta S_o)$$

La condition d'instabilité qui engendre l'effet Larsen est, en appelant $v_o$ la tension minimale d'entrée du régulateur 6 à partir de laquelle sa tension de sortie V est égale à la valeur maximale de régulation $V_o$ (voir figure 6) :

$$v > v_o, \text{ soit :}$$

$$(U_o G_r \beta_o)/(\alpha\beta S_o) \geqslant v_o \tag{1}$$

8

La condition (1) peut s'écrire, en désignant par $G_o$ la pente initiale de la courbe de gain du régulateur 6 en l'absence du signal de compression $S_o$ ($G_o = V_o/v_o$) :

$$(U_o G_r \beta_o)/(\alpha \beta S_o) \geqslant V_o/G_o, \text{ soit :}$$

$$G_o/S_o \geqslant \alpha(\beta/\beta_o \cdot 1/G_r)(V_o/U_o) \tag{2}$$

$V_o$ et $U_o$ sont constants en dépendance du circuit réalisé et sensiblement du même ordre de grandeur, par exemple 3 volts crête à crête. La condition de non-oscillation déduite de la condition (2) est donc, après simplification :

$$G_o/S_o < \alpha[(\beta/\beta_o) \cdot (1/G_r)] \tag{3}$$

$G_o/S_o$ est la pente réelle $V/v_1$ de la tension V à la sortie du régulateur 6 par rapport à la tension $v_1$ à l'entrée du régulateur.

Sur la figure 6 sont tracées les trois courbes suivantes :

P : courbe caractéristique du régulateur 6 (du type 601) en l'absence du signal de compression supplémentaire $S_o$ ;

Q : droite de pente $\alpha(\beta/\beta_o \cdot 1/G_r)$ passant par l'origine ;

R : courbe caractéristique du régulateur 6 (du type 601) en présence du signal de compression supplémentaire $S_o$.

La partie hachurée sur la figure 6 est une zone d'instabilité pour la partie de la courbe caractéristique du régulateur qui s'y trouve.

D'après la figure 6 il apparaît que dans le cas où le signal en provenance de la ligne téléphonique 2 est, en sortie de l'hybride 1, supérieur à : $v'_o = S_o v_o$, ce niveau de signal sera entendu au niveau du haut-parleur avec le niveau de sortie maximum $G_r P_o$.

Il faut noter que l'effet de compression du signal $S_o$ doit être choisi ni trop fort ni trop faible mais dans une plage de valeurs moyennes telle que pour des valeurs $G_e$ et $G_r$ données en ce qui concerne le gain des amplificateurs 5 et 7, on obtienne pour une première plage de distances courtes entre haut-parleur et microphone le phénomène d'effet Larsen évanescent déjà décrit et au-delà de cette plage un gain de boucle inférieur à 1, c'est-à-dire tel que l'effet Larsen ne puisse pas s'amorcer comme l'illustre la figure 6. Dans le cas où le gain $G_r$ de l'amplificateur 7 est réglable manuellement, il est possible, étant donnés certains couples de valeurs choisis pour les paramètres $G_r$ et $S_o$, d'obtenir une plage de distances entre microphone et haut-parleur qui est intermédiaire entre une plage de distances longues à gain de boucle inférieur à 1, cette plage de distances intermédiaires étant telle que le gain de boucle est supérieur à 1 alors que l'effet Larsen n'est pas évanescent mais continu. Pour cette plage de distances intermédiaires, le dispositif de protection selon l'invention décrit ci-dessus serait en défaut, puisque l'effet Larsen pourrait naître et se maintenir à un niveau sonore constant sans saturer le haut-parleur. Pour éviter cet inconvénient, une variante du mode de réalisation décrit ci-dessus consiste à asservir le signal de compression supplémentaire $S_o$ à la valeur du gain $G_r$, dans le sens d'une diminution de l'effet produit par le signal $S_o$ sur la voie d'écoute lorsque le gain $G_r$ est diminué (voir la condition 3 ci-dessus). De cette façon, la plage de distances intermédiaires indiquée ci-dessus peut être supprimée, quelle que soit la valeur choisie pour $G_r$. Avantageusement, l'effet de compression introduit par le signal $S_o$ est rendu proportionnel au gain $G_r$. L'asservissement de $S_o$ à $G_r$ peut être obtenu par exemple comme représenté en trait interrompu à la figure 3 : un signal représentatif du gain $G_r$ est transmis par l'intermédiaire d'un conducteur 132 de l'amplificateur d'écoute 7 à un organe 133 qui comporte la résistance 131, réglable en l'occurence. La valeur de la résistance 131 est réglée de façon connue par le signal sur le conducteur 132 de façon à faire varier le courant de collecteur du transistor 130 et par suite la valeur du signal de compression $S_o$ dans le sens et avec l'amplitude désirés. Dans ces conditions, à supposer par exemple que le bruit d'ambiance du poste soit faible, l'amplification d'écoute peut être diminuée en 7 et la voie d'un correspondant dont le signal de parole serait faible en sortie de l'hybride 1 est alors d'autant moins affaiblie par le signal $S_o$ en sortie du haut-parleur 4. Plus précisément, le niveau de tension seuil $v'_o$ du signal de sortie de l'hybride 1 au-dessous duquel l'influence du signal $S_o$ est perceptible à l'oreille de l'utilisateur l est ainsi rabaissé. Dans un poste téléphonique où le gain $G_e$ de l'amplificateur d'émission 5 serait aussi variable, il peut être avantageux, en fonction de certaines conditions d'utilisation du poste, d'asservir le signal $S_o$ à ce gain $G_e$ et/ou au produit des gains $G_e$ et $G_r$.

## Revendications

1. Dispositif de protection contre l'effet Larsen dans un poste téléphonique à haut-parleur comportant d'une part dans la voie d'écoute des premiers moyens de régulation automatique du niveau d'écoute (6) incorporant un circuit d'affaiblissement réglable (16), un amplificateur (7) dont le gain $G_r$ est modifiable manuellement et un haut-parleur (4), d'autre part dans la voie d'émission un microphone (3) des deuxièmes moyens (8) agissant sur le niveau de signal de la voie d'émission et un amplificateur de

# 0 039 109

signaux de parole (5) à gain $G_e$ généralement fixe, dispositif dans lequel est prévue une chaîne de commande (10) qui reçoit le signal de sortie du microphone et qui agit sur lesdits premiers et deuxièmes moyens (6, 8), les deux voies d'émission et d'écoute étant reliées à une ligne téléphonique (2) par l'intermédiaire d'un circuit hybride (1), caractérisé en ce que lesdits premiers moyens de régulation automatique du niveau d'écoute (6) comportent en outre un modulateur de largeur d'impulsions (19) et un circuit détecteur de dépassement (18), que l'action desdits deuxièmes moyens consiste à soit réduire fortement de façon discrète soit maintenir le niveau du signal émis par le microphone, que ladite chaîne de commande agit sur lesdits deuxièmes moyens soit dans le sens du maintien du niveau du signal d'émission lorsque le signal reçu par le microphone a dépassé un premier niveau sonore-seuil $S_1$ soit dans le sens de la réduction du niveau de signal d'émission lorsque le niveau du signal sonore reçu par le microphone est trop faible, le signal sonore dû à l'utilisateur lointain à l'entrée du microphone étant supposé inférieur à $S_1$ et le signal sonore dû à l'utilisateur proche étant supposé appartenir à une gamme qui comprend le seuil $S_1$, et que pendant le temps où ladite chaîne de commande (10) agit dans le sens du maintien du niveau du signal d'émission, elle agit aussi sur lesdits premiers moyens de régulation automatique du niveau d'écoute (6) en activant ledit circuit d'affaiblissement (16) dans le sens d'un affaiblissement de valeur prédéterminée, en introduisant un signal de compression additionnel $S_0$.

2. Dispositif de protection contre l'effet Larsen selon la revendication 1, caractérisé en ce que ladite chaîne de commande (10) agit sur lesdits deuxièmes moyens (8) soit dans le sens du maintien du niveau du signal d'émission lorsque le signal sonore reçu par le microphone a dépassé un premier niveau sonore-seuil $S_1$ et demeure ensuite à un niveau supérieur à un deuxième niveau sonore-seuil $S_2$ inférieur ou égal à $S_1$, soit dans le sens de la réduction du niveau du signal d'émission lorsque le niveau sonore reçu par le microphone est descendu pendant un temps prédéterminé en dessous du seuil $S_2$, le signal sonore dû à l'utilisateur proche étant supposé compris dans une gamme sonore supérieure au seuil $S_2$.

3. Dispositif de protection contre l'effet Larsen selon la revendication 1 ou 2, caractérisé en ce que la constante de temps pour le maintien de la voie d'émission est rapide par rapport à la constante de temps d'activation desdits premiers moyens (6) et en ce que celle pour la réduction du signal de microphone, qui est de l'ordre de 100 ms, est rapide par rapport à la constante de temps de désactivation desdits premiers moyens (6).

4. Dispositif de protection contre l'effet Larsen suivant l'une des revendications 1, 2 et 3 dans lequel lesdits premiers moyens de régulation automatique du niveau d'écoute (6) comportent, en plus d'un circuit d'affaiblissement réglable du signal vocal reçu (16), un modulateur de largeur d'impulsions (19-1, 19-2) qui fournit un signal formé d'impulsions modulées en largeur par le signal vocal fourni par le circuit d'affaiblissement réglable, un circuit détecteur de dépassement (18) qui, à partir du signal fourni par le modulateur, engendre une impulsion de compression chaque fois qu'il est détecté que l'amplitude du signal vocal de modulation atteint un certain seuil, lesdites impulsions de compression étant appliquées audit circuit d'affaiblissement (16) pour y commander la charge d'un circuit intégrateur qui fournit le signal de commande d'affaiblissement, les constantes de temps desdits premiers moyens (6) étant rapide lors de l'activation pour suivre la croissance d'un signal et lente lors de la désactivation.

5. Dispositif de protection contre l'effet Larsen selon l'une des revendications 1 à 4, caractérisé en ce que ledit signal additionnel de compression $S_0$ est asservi au gain réglable manuellement $G_r$ de l'amplificateur d'écoute (7) dans le sens d'une diminution de l'effet produit par le signal $S_0$ sur l'affaiblissement de la voie d'écoute lorsque le gain $G_r$ est diminué.

6. Dispositif de protection contre l'effet Larsen selon la revendication 5, caractérisé en ce que l'effet produit par le signal $S_0$ est, par asservissement, proportionnel au gain $G_r$.

7. Dispositif de protection contre l'effet Larsen selon l'une des revendications 1 à 6, caractérisé en ce que ladite chaîne de commande (10) comporte en cascade entre la sortie du microphone et l'entrée de commande desdits deuxièmes moyens une résistance (103, figure 3), un point de branchement (104), un organe logique (105), un circuit-porte NON-ET (106), un transistor npn (017) dont le collecteur est relié à une source de courant (103) et l'émetteur à la masse, un condensateur $C_1$ branché entre ladite source de courant et la masse, une diode (109) et l'entrée positive d'un amplificateur différentiel (110) dont l'entrée négative reçoit un niveau de tension constant et dont la sortie est connectée à l'entrée de commande desdits deuxièmes moyens (102, figure 3), ledit point de branchement (104) recevant après intégration (113, 114) un signal auxiliaire (A) qui peut être activé et désactivé à partir de la sortie dudit amplificateur différentiel (110), ledit signal auxiliaire (A) étant aussi fourni à une deuxième entrée dudit organe logique.

8. Dispositif de protection contre l'effet Larsen selon l'une des revendications 1 à 7, caractérisé en ce que pour l'introduction dudit signal de compression additionnel $S_0$, ledit circuit d'affaiblissement réglable appartenant à la voie d'écoute (601) est commandé sur une deuxième entrée à partir du signal de sortie dudit amplificateur différentiel (110), par l'intermédiaire d'une chaîne constituée par un inverseur (116), un point de branchement (117), une résistance (127), le trajet base-collecteur d'un transistor npn (126) dont l'émetteur est relié à la masse, une résistance (129) et le trajet base-collecteur d'un transistor npn (130) dont la base et l'émetteur sont reliés à la borne d'alimentation positive respectivement par l'intermédiaire d'une résistance (128, respectivement 131).

9. Dispositif de protection contre l'effet Larsen selon l'une des revendications précédentes, caractérisé en ce que lesdits deuxièmes moyens que comporte la voie d'émission sont constitués par un transistor npn (102) commandé par sa base, dont le collecteur est relié à l'entrée dudit amplificateur d'émission (5) par l'intermédiaire d'une résistance (101) et l'émetteur au pôle négatif d'alimentation (masse), et pouvant comporter une résistance de collecteur.

## Claims

1. An anti-Larsen-effect arrangement in a telephone station equipped with a loudspeaker, the listening channel comprising first automatic listening-level control means (6) incorporating a variable attenuator circuit (16), an amplifier (7) whose gain $G_r$ is manually variable and a loudspeaker (4), the transmission channel comprising a microphone (3), second means (8) which act on the signal level of the transmission channel and a speech signal amplifier (5) having a, generally fixed, gain $G_e$, the arrangement being provided with a control chain (10) which receives the output signal of the microphone and influences said first and second means (6, 8), the transmission channel and the listening channel being connected to a telephone line (2) via a hybrid circuit (1), characterized in that the said first means for automatic listening-level control comprises a pulse-width modulator (19) and a threshold detector circuit (18), that the operation of said second means consists either in an unobtrusive manner substantially reducing or in maintaining the level of the signal transmitted by the microphone, that the said control chain influences said second means either so as to maintain the level of the transmit signal when the signal received by the microphone has exceeded a first sound level threshold $S_1$ or so as to reduce the level of the transmit signal when the level of the sound signal received by the microphone is too weak, the sound signal caused by the remote user at the input of the microphone being assumed to be smaller than $S_1$ and the sound signal produced by the local user being assumed to be within a range comprising the threshold $S_1$, and that during the time in which said control chain (10) acts so as to maintain the level of the transmit signal it also influences said first means (6) for automatic listening-level control by actuating said attenuator (16) so as to obtain a predetermined attenuation by the introduction of an additional compression signal $S_0$.

2. An anti-Larsen-effect arrangement as claimed in Claim 1, characterized in that said control chain (10) influences said second means (8) either so as to maintain the level of the transmit signal when the sound signal received by the microphone has exceeded a first sound level threshold $S_1$ and subsequently remains at a level higher than a second sound level threshold $S_2$, which is below or equal to $S_1$, or so as reduce the level of the transmit signal when the sound level received by the microphone has decreased below the threshold $S_2$ for a predetermined time, the sound signal caused by the local user being assumed to be situated in a sound level range above the threshold $S_2$.

3. An anti-Larsen-effect arrangement as claimed in Claim 1 or 2, characterized in that the time constant for maintaining the tramsmission path is fast relative to the time constant with which said first means (6) are rendered operative that the time constant for reducing the microphone signal, which is of the order of 100 ns, is fast relative to the time constant with which said first means (6) are rendered inoperative.

4. An anti-Larsen-effect as claimed in any of the Claims 1, 2 and 3, which said first means (6) for automatic listening-level control, control, in addition, a variable attenuator circuit for the received speech signal (16), a pulse-width modulator (19-1, 19-2) which produces a signal formed by pulses which are modulated in width by the speech signal produced by the variable attenuator circuit, a threshold detector (18) which in response to the signal produced by the modulator produces a compression pulse each time it detects that the amplitude of the modulating speech signal reaches a certain threshold, said compression pulses being applied to said attenuator circuit (16) in order to control the charge of an integrator circuit which produces the attenuation control signal, the time constants of said first means (6) being fast during actuation in order to follow the increase of a signal and slow during deactivation.

5. An anti-Larsen-effect arrangement as claimed in any one of the Claims 1 to 4, characterized in that said additional compression signal $S_0$ depends on the manually variable gain $G_r$ of the listening amplifier (7) so as to obtain a reduction of the effect of the signal $S_0$ on the attenuation of the listening channel when the gain $G_r$ decreases.

6. An anti-Larsen-effect as claimed in Claim 5, characterized in that the effect produced by the signal $S_0$ is controlled to be proportional to the gain $G_r$.

7. An anti-Larsen-effect arrangement as claimed in any one of the Claims 1 to 6, characterized in that said control chain (10) comprises in cascade between the output of the microphone and the control input of said second means a resistor (103, figure 3), a tapping point (104), a logic element (105), a NAND-gate (106), an npn-transistor (17), whose collector is connected to a current source (103) and whose emitter is connected to earth, a capacitor $C_1$ arranged between said current source and ground, a diode (109) and the positive input of a differential amplifier (110) which receives a constant voltage level on its negative input and whose ouput is connected to the control input of said second means (202, figure 3), said tapping point (104) receiving, after integration (113, 114), an auxiliary signal (A) which can be rendered active and in-active by the output of the said differential amplifier (110), said auxiliary signal (A) being also applied to a second input of said logic element.

8. An anti-Larsen-effect arrangement as claimed in anyone of the Claims 1 to 7, characterized in that for the introduction of said additional compression signal $S_0$ said variable attenuation circuit which belongs to the listening channel (101) is controlled via a second input by the output signal of said differential amplifier (110) via a chain formed by an inverter (116), a tapping point (117), a resistor (127), the base-collector path of an npn-transistor (126) whose emitter is connected to ground, a resistor (129) and the base-collector path of an npn-transistor (130) whose base and emitter, respectively, are connected to the positive supply terminal via a resistor (128 and 131, respectively).

9. An anti-Larsen-effect arrangement as claimed in anyone of the preceding Claims, characterized in that said second means in the transmission channel are formed by an npn-transistor (102) which is controlled on its base, whose collector is connected to the input of said transmission amplifier (5) via a resistor (101) and whose emitter is connected to the negative power supply terminal (ground) and may be provided with a collector resistor.


**Ansprüche**

1. Eine Anti-Larsen-Effekt-Anordnung in einem Fernsprechapparat mit einem Lautsprecher, wobei der Hörkanal erste automatische Hörpegelregelmittel (6) mit einer veränderlichen Dämpfungsschaltung (16), einem Verstärker (7) dessen Verstärkung $G_r$ von Hand veränderlich ist und mit einem Lautsprecher (4) enthält, wobei der Uebertragungskanal ein Mikrophon (3), zweite Mittel (8), die auf den Signalpegel des Uebertragungskanals einwirken und einen Sprachsignalverstärker (5) mit einer normalerweise festen Verstärkung $G_e$, enthält, wobei die anordnung eine Regelkette (10) enthält, die das Ausgansssignal des Mikrophons enthält und die ersten und zweiten gennanten Mittel (6, 8) beeinflusst, wobei der Uebertragungskanal und der Hörkanal mit einer Fernsprechleitung (2) verbunden ist und zwar über eine Hybridschaltung (1), dadurch gekennzeichnet, dass die genannten ersten Mittel für die automatische Hörpegelregelung (6) einen Impulsbreitenmodulator (19) und eine Schwellendetektorschaltung (18) enthalten, dass der Betrieb der genannten zweiten Mittel entweder aus einer bescheidenen im wesentlichen Verringerung oder aus einer Beibehaltung des Pegels des von dem Mikrophon übertragenen Signals besteht, dass die genannte Regelkette die genannten zweiten Mittel entweder derart beeinflussen, dass der Pegel des Uebertragungssignals beibehalten wird, wenn das von dem Mikrophon erhaltene Signal eine erste Schallpegelschwelle $S_1$, überschreitet oder dass der Pegel des Uebertragungssignals verringert wird, wenn der Pegel des von dem Mikrophon erhaltenen Tonsignals zu schwach ist, wobei das von dem entferten Benutzer herbeigeführte Tonsignal am Eingang des Mikrophons als kleiner betrachtet wird als $S_1$ und das von dem örtlichen Benutzer erzeugte Tonsignal betrachtet wird als sei es innerhalb eines Bereichs mit der Schwelle $S_1$, und dass während der Zeit, in der die genannte Regelkette (10) den Pegel des Uebertragungssignals beibehält, diese Kette ebenfalls die ersten genannten Mittel (6) für eine automatische Hörpegelregelung durch Beeinflussung des genannten Dämpfunsgliedes (16) beeinflusst um eine vorbestimmte Dämpfung durch Einführung eines zusätzlichen Kompressions $S_0$ zu erhalten.

2. Eine-Anti-Larsen-Effekt-Anordnung nach Anspruch 1, dadurch gekennzeichnet, dass die genannte Regelkette (10) die genannten zweiten Mittel (18) beeinflusst entweder um den Pegel des Uebertragungssignals beizubehalten, wenn das von dem Mikrophon erhaltene Tonsignal eine erste Tonpegel-schwelle $S_1$ überschreitet und danach auf einem Pegel höher als eine zweite Tonpegelschwelle $S_2$ bleibt, die niedriger ist als oder gleich ist wie $S_1$, oder um den Pegel des Uebertragungssignals zu verringern, wenn der von dem Mikrophon erhaltene Tonpegel die Schwelle $S_2$ während einer vorbestimmten Zeit unterschreitet, wobei das von dem örtlichen Benutzer hervorgebrachte Tonsignal als in einem Tonpe-gelbereich über der Schwelle $S_2$ liegend betrachtet wird.

3. Eine Anti-Larsen-Effekt-Anordnung nach Anspruch 1 oder 2, dadurch gekennzeichnet, dass die Zeitkonstante zum Beibehalten der Uebertragungsstrecke schnell ist gegenüber der Zeitkonstante, mit der die genannten ersten Mittel (6) wirksam sind, dass die Zeitkonstante zur Verringerung des Mikrophonsignals, die in der Grössenordnung von 100 mS ist, schnell ist gegenüber der Zeitkonstante mit der die genannten ersten Mittel (6) nicht wirksam sind.

4. Eine-Anti-Larsen-Effekt-Anordnung nach einem der Ansprüche 1, 2 und 3, wobei die genannten ersten Mittel (6) für die automatische Hörpegelregelung, ausserdem eine veränderliche Dämpfungsschaltung für das empfangene Sprechsignal (16), einen Impulsbreitenmodulator (19-1, 19-2), der ein Signal erzeugt, das durch Impulse gebildet wird, die durch das Sprechsignal von der veränderlichen Dämpfungsschaltung moduliert werden und einen Schwellendetektor (18) steuern der in Antwort auf das von dem Modulator erzeugten Signal einen Kompressionsimpuls erzeugt und zwar jedes mal, wenn der Detektor detektiert, dass die Amplitude des modulierenden Sprechsignals eine bestimmte Schwelle erreicht, wobei die genannten Kompressionsimpulse der genannten Dämpfungsschaltung (16) zugeführt werden um die Ladung einer Integratorschaltung zu regeln, die das Dämpfungsregelsignal erzeugt, wobei die Zeitkonstanten der genannten ersten Mittel (6) schnell sind während der Aktivierung um dem Anstieg eines Signals zu folgen und langsam sind während der Desaktivierung.

5. Eine Anti-Larsen-Effekt-Anordnung nach einem der Ansprüche 1 bis 4, dadurch gekennzeichnet, dass das genannte zusätzliche Kompressionssignal $C_0$ abhängig ist von der von Hand veränderlichen Verstärkers (7) um eine Verringerung des Effektes des Signals $S_0$ bei der Dämpfung des Hörkanals zu erhalten, wenn die Verstärkung $G_r$ verringert.

6. Eine Anti-Larsen-Effekt-Anordnung nach Anspruch 5, dadurch gekennzeichnet, dass der Effekt der von dem Signal $S_0$ herbeigeführt wird, derart geregelt wird, dass es zu der Verstärkung $G_r$ proportional ist.

7. Eine Anti-Larsen-Effekt-Anordnung nach einem der Ansprüche 1 bis 6, dadurch gekennzeichnet, dass die genannte Regelkette (10) zwischen dem Ausgang des Mikrophons und dem Regeleingang der genannten zweiten Mittel eine Reihenschaltung aus einem Widerstand (103, Figure 3), einem Abgriffpunkt (104), einem logischen Element (105) einem NAND-Gatter (106), einem NPN-Transistor (17), dessen Kollektor mit einer Stromquelle (103) verbunden ist und dessen Emitter mit Erde verbunden ist, einem Kondensator $C_1$, der zwischen der genannten Stromquelle und Erde liegt, einer Diode (109) und dem positiven Eingang eines Differentialverstärkers (110), der an dem negativen Eingang einen konstanten Spannungspegel erhält und dessen Ausgang mit dem Regeleingang der genannten zweiten Mittel (102, Figure 3) verbunden ist, wobei der genannte Abgriffpunkt (104) nach Integration (113, 114) ein Hilfssignal (A) erhält, das durch das Ausgangssignal des genannten Differentialverstärkers (11) aktiv oder unaktiv sein kann, wobei das genannte Hilfssignal (A) ebenfalls einem zweiten Eingang des genannten Logikelementes zugeführt wird.

8. Eine Anti-Larsen-Effekt-Anordnung nach einem der Ansprüche 1 bis 7, dadurch gekennzeichnet, dass zum Einführen des genannten zusätzlichen Kompressionssignals $S_0$ die genannte veränderliche Dämpfungsschaltung die zu dem Hörkanal (101) gehört, über einen zweiten Eingang geregelt wird und zwar durch das Ausgangssignal des genannten Differentialverstärkers (110) über eine Kette, die durch einen Inverter (116), einen Abgriffpunkt (117), einen Widerstand (127), die Basis-Kollektor-Strecke eines NPN-Transistors (126), dessen Emitter mit Erde verbunden ist, einen Widerstand (129) und die Basis-Kollektor-Strecke eines NPN-Transistors (130), dessen Basis und Emitter mit einer positiven Speiseklemme verbunden sind und zwar über eine Widerstand (128 bzw. 131), gebildet ist.

9. Eine Anti-Larsen-Effekt-Anordnung nach einem der vorstehenden Ansprüche dadurch gekennzeichnet, dass die genannten zweite Mittel in dem Uebertragungskanal durch einen NPN-Transistor (102) gebildet werden, der an der Basis gesteuert wird, dessen Kollektor mit dem Eingang des genannten Uebertragungsverstärkers (5) verbunden ist und zwar über einen Widerstand (101), und dessen Emitter mit der negativen Speisespannungsklemme (Erde) verbunden ist und mit einem Kollektorwiderstand versehen sein kann.

**FIG.1**

FIG.2

FIG.3

0 039 109

FIG.3

FIG.4

FIG.5

FIG.6

4